# EUROPÄISCHE PATENTSCHRIFT

(11) **EP 0 845 614 B1**
(45) Veröffentlichungstag und Bekanntmachung des Hinweises auf die Patenterteilung: **22.05.2002**
(21) Anmeldenummer: 97118787.7
(22) Anmeldetag: 29.10.1997
(51) Int. Cl.: F16D 1/08, F16D 1/06, F16D 3/20

(54) **Polygonverbindung einer Nabe mit einer Welle**
Polygonal connection of a hob with a shaft
Joint polygonal d'un moyeu avec un arbre.

(30) Priorität: 27.11.1996 DE 19648996
(43) Veröffentlichungstag der Anmeldung: 03.06.1998
(73) Patentinhaber: Ford Global Technologies, Inc., Dearborn, Michigan 48126 (US)
(72) Erfinder: Bruell, Herbert, 52316 Heimbach (DE); Steinmeier, Hans Joachim, 50129 Glessen (DE); Wisskirchen, Josef, 53331 Bornheim (DE)
(74) Vertreter: Ritzkowsky, Harald, Dipl.-Ing.

(56) Entgegenhaltungen:
- EP-A- 0 415 761
- DE-A- 1 931 266
- US-A- 1 912 412
- US-A- 4 043 146
- US-A- 5 221 233

## Beschreibung

Die Erfindung bezieht sich auf eine Polygonverbindung entsprechend dem Oberbegriff des Anspruchs 1.

Polygonverbindungen als Formschluß-Verbindungen zwischen Naben und Wellen sind bereits in G. Niemann: "Maschinenelemente", Springer Verlag, 1963, beschrieben. Allerdings weisen die Polygonverbindungen bei gleichem Wellendurchmesser und gleicher Nabenbreite nicht die gleiche Drehmomentkapazität wie Kerbzahnprofile auf. Bedingt durch die Formgebung der Polygonprofile treten vor allem an den Polygonecken der Nabe erhebliche Spannungsspitzen auf, so daß die Nabe einer Polygonverbindungen erheblich größer dimensioniert werden muß als eine Nabe mit Kerbzahnprofilen.

Aus der DE-OS 29 29 908 ist eine Polygonverbindung einer Nabe mit einer Welle bekannt, bei der zur Sicherstellung der spielfreien Verbindung in der Nähe der Ecken des polygonalen Querschnittes der Welle parallel zur Wellenachse verlaufende radial aufweitbare Zapfen angeordnet sind, deren Achsen innerhalb des Umfanges der Welle gelegen sind.

Mit dieser Maßnahme sollte das Problem beseitigt werden, das vor etwas 15 Jahren, zum Zeitpunkt der Anmeldung, die Herstellung von ineinanderpassenden polygonalen Querschnitten noch nicht mit der hohen Genauigkeit erfolgen konnte, die eine spielfreie Verbindung gewährleisten.

Die Aufgabe der vorliegenden Erfindung ist es, eine Polygonverbindung einer Nabe mit einer Welle derart zu gestalten, daß nunmehr unter Ausnutzung der hochgenauen Herstellbarkeit von ineinanderpassenden polygonalen Querschnitten unmittelbar eine spielfreie Verbindung bereitgestellt werden kann, wobei die Polygonverbindung eine ähnlich hohe Belastung ertragen soll wie die bekannten Vielkeilwellen.

Gemäß der Erfindung wird diese Aufgabe gelöst, indem bei einer Polygonverbindung einer Nabe mit einer Welle, gemäß dem Oberbegriff des Patentanspruches 1 die im Kennzeichenteil des Patentanspruches 1 aufgezeigten Maßnahmen angewendet werden.

Dadurch, daß die Verbindungslinien zwischen den Polygonecken vollständig konvex ansgeführt sind, wird unmittelbar ohne zusätzliche Bauteile ein zuverlässiger spielfreier Preßsitz erzielt.

Das polygonale Innenprofil der Nabe kann hierbei vorzugsweise durch Kaltfließpressen oder durch Unrunddrehen hergestellt werden und ebenso kann das polygonale Außenprofil der Welle durch Unrundkneten, Unrundwalzen oder Unrunddrehen hergestellt werden.

Möglicherweise wird hierbei für den konischen Winkel der polygonalen Querschnitte ein Winkel • von 1° innerhalb der Selbsthemmung gewählt.

Vorzugsweise Anwendung bei Rädantriebswellen mit Gleichlaufgelenken sowohl rad- und getriebeseitig, wobei die mit einem Unrund-Innenprofil versehene Nabe ein Tripodengelenk-Wellenstern oder eine Rezzepagelenk-Kugelnabe sein kann und die mit einem Unrund-Außenprofil versehene Welle an den Enden der mit diesen Bauteilen zusammenwirkenden Antriebshalbwellen ausgebildet ist.

Vorzugsweise wird für die mit einem Tripodenstern zusammen wirkende Welle eine dreieckige Unrundform für die mit einer Rezzepagegelenk-Kugelnabe zusammenwirkende Welle eine sechseckige Unrundform gewählt, die derart zu den Außenkonturen dieser Bauteile angeordnet werden, daß Querschnittsschwächungen vermieden werden. Ein optimales Polygonprofil ist für den entsprechenden Anwendungsfall auszulegen.

Die Erfindung wird anhand zweier in den beigefügten Zeichnungen gezeigten Ausführungsbeispiele näher erläutert. Es zeigt:
- Fig. 1: eine Endansicht auf eine Polygonverbindung einer Nabe mit einer Welle, wobei die Nabe von einem Tripodengelenk-Wellenstern und die Welle vom Endabschnitt einer Antriebshalbwelle gebildet wird;
- Fig. 2: einen Schnitt entlang der Linie II-II in Fig. 1;
- Fig. 3: eine Endansicht einer Rezzepagelenk-Kugelnabe;
- Fig. 4: einen Schnitt entlang der Linie IV-IV in Fig. 3;
- Fig. 5: eine weitere Endansicht eines Tripodengelenk-Wellensternes mit einem anderen polygonalen Querschnitt;
- Fig. 6: einen Schnitt entlang der Linie VI-VI in Fig. 5;
- Fig. 7: eine Endansicht einer Rezzepagelenk-Kugelnabe mit einem weiteren polygonalen Querschnitt und
- Fig. 8: einen Schnitt entlang der Linie VIII-VIII in Fig. 7.

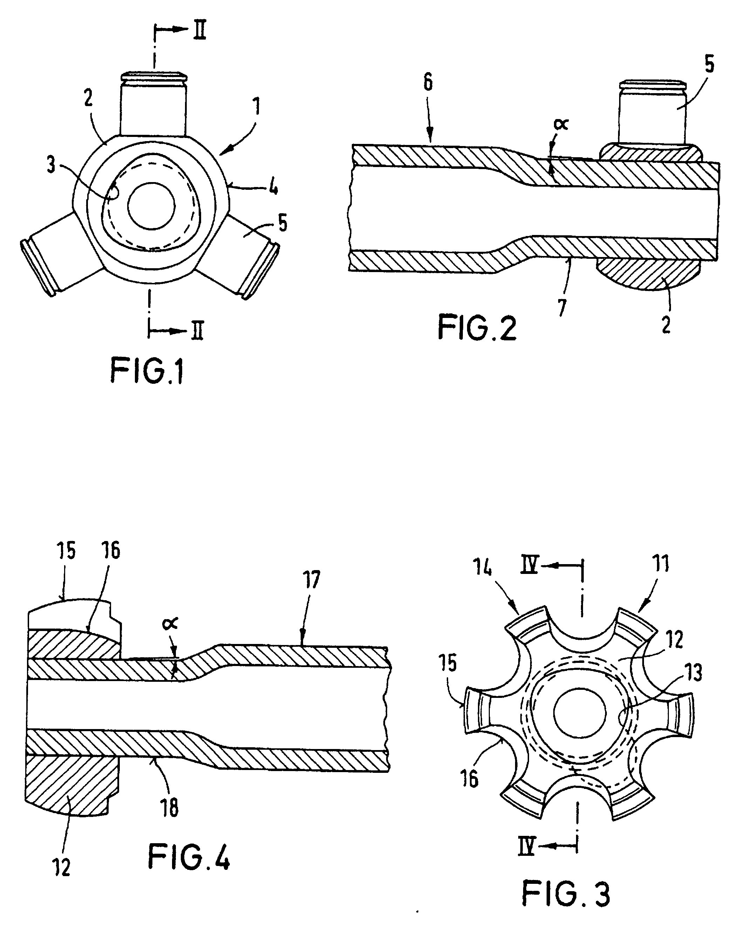

Bei den in den verschiedenen Figuren gezeigten Polygonverbindungen einer Nabe mit einer Welle besteht in den Figuren 1, 2, 5 und 6 die Nabe aus einem Tripodengelenk-Wellenstern 1, der aus einem Nabenkörper 2, mit einer Nabenbohrung 3 und an seinem Außenumfang 4 radial abstehenden Achszapfen 5 besteht.

Die Welle besteht hierbei aus einer Antriebshalbwelle 6, deren Ende 7 einen unter einem Winkel α von 0° bis 1° ausgeführten polygonalen Querschnitt aufweist. Die Welle 6 kann hierbei sowohl als Rohr- als auch als Massivwelle ausgeführt sein.

Selbstverständlich ist auch die Bohrung 3 im Nabenkörper 2 mit einem unter einem entsprechenden Winkel von 0° bis 1° mit einem übereinstimmenden polygonalen Querschnitt ausgeführt.

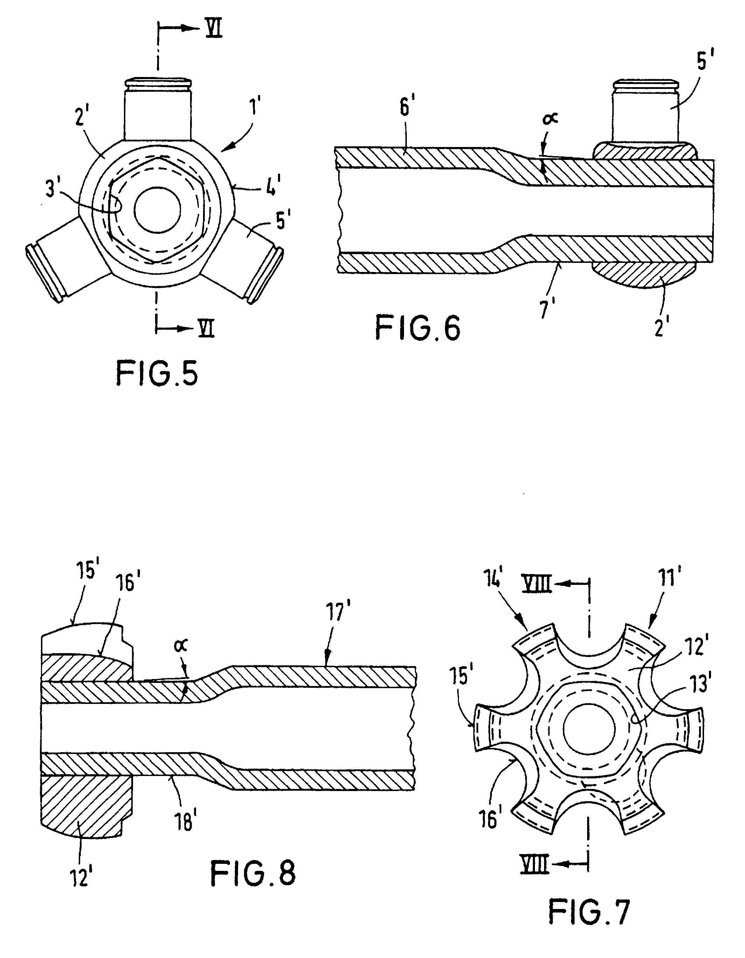

Nachdem sich die Ausführungen in den Figuren 5 und 6 lediglich durch die Form des polygonalen Querschnittes unterscheidet, sind in den Figuren 1 und 2 und den Figuren 5 und 6 übereinstimmende Bezugszeichen gewählt worden, die in den Figuren 5 und 6 mit einem Strichindex versehen wurden.

In den Figuren 4, 3, 7 und 8 ist die Nabe durch einen Rezzepagelenk-Kugelnabe 11 gebildet, die in ihrem Nabengrundkörper 12 eine Innenbohrung 13 aufweist, die einen polygonalen Querschnitt aufweist. An ihrem Außenumfang 14 ist sie mit äußeren Kugelführungsflächen 15 und inneren Kugelführungsbahnen 16 versehen.

Die Welle wird hier wieder von einer Antriebshalbwelle 17 gebildet, deren verjüngtes Ende 18 einen mit der Bohrung 13 übereinstimmenden polygonalen Querschnitt aufweist, der unter einem Winkel α von 0° bis 1° konisch ausgeführt ist.

Durch das gemäß der Erfindung vorgesehene Herstellungsverfahren durch Kaltfließpressen und Unrunddrehen für die Nabe und durch Unrundkneten, Unrundwalzen oder Unrunddrehen für die Welle kann der polygonale Querschnitt so genau hergestellt werden, daß durch ein Zusammenfügen unter Axialdruck ein spielfreier Preßsitz erzielt wird, der sich unter Betriebsbedingungen nicht löst.

Die gemäß der Erfindung vorgeschlagene Polygonverbindung zwischen einer Nabe und einer Welle ist in besonders vorteilhafter Weise für Antriebshalbwellen von Kraftfahrzeuge anwendbar, bei denen bisher die an den Antriebshalbwellen angeschlossenen Tripodengelenke oder Rezzepagelenke über bekannte Vielkeilwellenverbindungen angeschlossen waren, die für diese hoch beanspruchten Bauteile insofern ungünstig waren, als hier die durch die Vielkeilwellen gegebene Kerbwirkung bei maximaler Belastung zu unerwünschten und gefährlichen Brücken der Antriebswellen geführt hat.

Durch die heute gegebenen Herstellungsverfahren, durch die eine Herstellung von polygonalen Querschnitten in konischer oder zylindrischer Ausführung mit einer so hohen Genauigkeit möglich ist, daß ein spielfreier Preßsitz zwischen den miteinander zu verbindenden Bauteilen erzielt werden kann, wird eine Polygonverbindung zwischen Antriebshalbwellen und den Tripodengelenken oder Rezzepagelenken erzielt, die kaum mehr irgendeine Kerbwirkung aufweist und dementsprechend auch bei hohen zu übertragenden Drehmoment sehr effektiv, d.h., kostenund gewichtssparend dimensioniert werden kann.

## Patentansprüche

1. Polygonverbindung einer Nabe mit einer Welle, bei der die Bohrung (3) der Nabe (4) und die Außenkontur (7) der Welle (6) von der Kreisform abweichende, spielfrei ineinanderpassende polygonale Querschnitte (3 und 7) mit abgerundeten Polygonecken aufweisen, wobei die polygonalen Querschnitte (3 und 7) der Nabe (4) und der Welle (6) mit einem konischen Winkel oder zylindrisch ausgeführt sind und unter Axialdruck so zusammengefügt werden, daß ein spielfreier Preßsitz erzielt wird,
**dadurch gekennzeichnet, daß**
die Verbindungslinien zwischen den Polygonecken vollständig konvex ausgeführt sind.

2. Polygonverbindung nach Anspruch 1,
**dadurch gekennzeichnet, daß**
die mit einem Unrund-Innenprofil (3) versehene Gleichlaufnabe ein Tripodengelenk-Wellenstern (1 bzw. 1') ist.

3. Polygonverbindung nach Anspruch 2,
**dadurch gekennzeichnet, daß**
der Tripodengelenk-Wellenstern (1 bzw. 1') eine dreieckige Unrundform aufweist, die derart angeordnet ist, daß eine Querschnittsschwächung vermieden wird.

4. Polygonverbindung nach Anspruch 1,
**dadurch gekennzeichnet, daß**
die mit einem Unrund-Innenprofil (3) versehene Gleichlaufnabe eine Rezzepagelenk-Kugelnabe (11 bzw. 11') ist.

5. Polygonverbindung nach Anspruch 4,
**dadurch gekennzeichnet, daß**
die Rezzepagelenk-Kugelnabe (11 bzw. 11') eine sechseckige Unrundform aufweist, die derart angeordnet ist, daß eine Querschnittsschwächung vermieden wird.

6. Herstellung einer Polygonverbindung nach Anspruch 1,
**dadurch gekennzeichnet, daß**
das Innenprofil (3) der Nabe (4) durch Kaltfließpressen hergestellt wird.

7. Herstellung einer Polygonverbindung nach Anspruch 1,
**dadurch gekennzeichnet, daß**
das Außenprofil (7) der Welle (6) durch Unrundkneten oder Unrundwalzen hergestellt wird.

8. Verwendung einer Polygonverbindung nach Anspruch 1,
**gekennzeichnet durch** die Verwendung
bei der Verbindung einer Antriebshalbwelle mit einem Gleichlaufgelenk in einem Kraftfahrzeug.

## Claims

1. Polygonal connection of a hub to a shaft, in which the bore (3) of the hub (4) and the outer contour (7) of the shaft (6) have polygonal cross sections (3 and 7) deviating from the circular shape and fitting, free of play, one into the other and having rounded polygon corners, the polygonal cross sections (3 and 7) of the hub (4) and of the shaft (6) being produced with a conical angle or cylindrically and being assembled under axial pressure in such a way that a play-free press fit is achieved, **characterized in that** the connecting lines between the polygon corners are made completely convex.

2. Polygonal connection according to Claim 1, **characterized in that** the synchronous hub provided with a non-round inner profile (3) is a tripod-joint shaft molette (1 or 1').

3. Polygonal connection according to Claim 2, **characterized in that** the tripod-joint shaft molette (1 or 1') has a triangular non-round shape which is arranged in such a way that a cross-sectional weakening is avoided.

4. Polygonal connection according to Claim 1, **characterized in that** the synchronous hub provided with a non-round inner profile (3) is a Rezzepa-joint ball hub (11 or 11').

5. Polygonal connection according to Claim 4, **characterized in that** the Rezzepa-joint ball hub (11 or 11') has a hexagonal non-round shape which is arranged in such a way that a cross-sectional weakening is avoided.

6. Production of a polygonal connection according to Claim 1, **characterized in that** the inner profile (3) of the hub (4) is produced by cold extrusion.

7. Production of a polygonal connection according to Claim 1, **characterized in that** the outer profile (7) of the shaft (6) is produced by non-round kneading or non-round rolling.

8. Use of a polygonal connection according to Claim 1, **characterized by** use for connecting a drive half-shaft to a synchronous joint in a motor vehicle.

## Revendications

1. Connexion polygonale d'un moyeu à un arbre, dans laquelle l'alésage (3) du moyeu (4) et le contour extérieur (7) de l'arbre (6) présentent des sections transversales polygonales (3 et 7) avec des coins de polygone arrondis s'adaptant l'une dans l'autre sans jeu et s'écartant de la forme circulaire, les sections transversales polygonales (3 et 7) du moyeu (4) et de l'arbre (6) étant réalisées avec un angle conique ou cylindriquement et étant assemblées sous pression axiale de telle sorte que l'on obtienne un ajustement serré sans jeu, **caractérisée en ce que** les lignes de connexion entre les coins de polygone sont réalisées avec une forme entièrement convexe.

2. Connexion polygonale selon la revendication 1, **caractérisée en ce que** le moyeu synchrone pourvu d'un profilé interne non circulaire (3) est une molette d'arbre à articulation du type tripode (1, respectivement 1').

3. Connexion polygonale selon la revendication 2, **caractérisée en ce que** la molette d'arbre à articulation du type tripode (1, respectivement 1') présente une forme non circulaire triangulaire, qui est disposée de telle sorte que l'on puisse éviter un affaiblissement de la section transversale.

4. Connexion polygonale selon la revendication 1, **caractérisée en ce que** le moyeu synchrone pourvu d'un profilé interne non circulaire (3) est un moyeu sphérique à articulation Rezzepa (11, respectivement 11').

5. Connexion polygonale selon la revendication 4, **caractérisée en ce que** le moyeu sphérique à articulation Rezzepa (11, respectivement 11'), présente une forme non circulaire hexagonale, qui est disposée de telle sorte que l'on puisse éviter un affaiblissement de la section transversale.

6. Connexion polygonale selon la revendication 1, **caractérisée en ce que** le profilé interne (3) du moyeu (4) est fabriqué par matriçage à froid.

7. Connexion polygonale selon la revendication 1, **caractérisée en ce que** le profilé externe (7) de l'arbre (6) est fabriqué par pétrissage non circulaire ou laminage non circulaire.

8. Utilisation d'une connexion polygonale selon la revendication 1, **caractérisée par** l'utilisation dans la connexion d'un demi-arbre d'entraînement à un joint homocinétique dans un véhicule automobile.
